# EUROPÄISCHE PATENTSCHRIFT

(11) **EP 0 325 662 B1**
(45) Veröffentlichungstag und Bekanntmachung des Hinweises auf die Patenterteilung: **31.03.1993**
(21) Anmeldenummer: 88100995.5
(22) Anmeldetag: 23.01.1988
(51) Int. Cl.: C10G 1/02, C10B 53/00

(54) **Verfahren und Vorrichtung zur Gewinnung von Brennstoffen aus organischem Material**
Process and Apparatus for the recuperation of fuels from organic material
Procédè et Installation de récupération de combustibles à partir de matière organique

(43) Veröffentlichungstag der Anmeldung: 02.08.1989
(73) Patentinhaber: Alfred Bolz GmbH & Co. KG, D-88239 Wangen (DE)
(72) Erfinder: Bolz, Alfred, D-7988 Wangen im Allgäu (DE); Boos, Günther, D-7989 Argenbühl 1 (DE)
(74) Vertreter: Knoblauch, Ulrich, Dr.-Ing.

(56) Entgegenhaltungen:
- EP-A- 0 003 803
- EP-A- 0 052 334
- AU-B- 119 700
- DE-A- 2 911 905
- US-A- 1 674 420

## Beschreibung

Die Erfindung betrifft ein Verfahren und eine Vorrichtung zur Gewinnung von Brennstoffen aus organischem Material.

Die Mengen an Abfällen der Industrie und der Haushalte werden von Jahr zu Jahr größer. Eine ordnungsgemäße Entsorgung wird immer dringender. Von Fachleuten wird prophezeit, daß die Aufwendungen hierfür in einigen Jahrzehnten Ausmaße annehmen werden die denen der heutigen öffentlichen Haushalte von Schulwesen und Straßenbau entsprechen. Hinzu kommt noch, daß die natürlichen Vorräte an Grundstoffen immer weniger werden, auf der anderen Seite jedoch die Abfälle eine Vielzahl wiederverwertbare Rohstoffe enthalten. Das gilt bereits für den Müll, jedoch in besonders großem Maße für den kompostierten Müll wie etwa Klärschlamm oder die reinen biologischen Abfälle wie beispielsweise vernichtete Agrarprodukte der landwirtschaftlichen Überschußproduktion; auch Trester von Weintrauben der Weinkellereien oder von Abfallprodukten der Brauereien zählen hierzu.

Aus dieser Erkenntnis heraus wurden bereits zahlreiche Methoden erarbeitet um die wertvollen Rohstoffe aus dem organischen Abfall zurückzugewinnen. So ist beispielsweise bekannt, daß trockener Klärschlamm durch Erhitzen unter Luftausschluß in Kohle, Öl, brennbare sowie nichtbrennbare Gase und Reaktionswasser zerlegt werden.

In DE-A-3042964 wird ein Verfahren zur Umwandlung von biologischem Material zu festen und flüssigen Brennstoffen beschrieben. Die Biomasse durchläuft hierbei einen zeitabhängigen Temperaturgradienten zwischen 200° - 500°C. Dieser zeitabhängige Temperaturgradient ist allerdings in dieser Veröffentlichung nicht angegeben, - wohl deshalb nicht, weil er je nach verwendetem biologischem Ausgangsmaterial unterschiedlich ist.

In EP-A-0 052 334 wird ein kontinuierliches Verfahren erwähnt bei dem das trockene Ausgangsmaterial, z.B. körniger oder pulverisierter Klärschlamm mittels einer Förderschnecke durch ein beheiztes Reaktionsrohr transportiert wird, wobei als "Konvertierungsprozeßdauer" 2 bis 3 Stunden und Aufheizgeschwindigkeiten von 5°C bis 30°C pro Minute angegeben sind.

In DE-A-3605638 wird eine Vorrichtung zur Gaserzeugung aus Biomasse beschrieben bei welcher das Ausgangsmaterial einer konischen Drehtrommel als Zentrifuge über seinen Eingangsbereich mit einem kleinen Durchmesser zugeführt und über die nachfolgende Biomasse zum Ausgangsbereich geschoben wird. Gleichzeitig wird durch Luftzuführung im Ausgansbereich ein Pyrolyseprozeß in Gang gesetzt, welcher Schwelgas erzeugt.

In "Korrespondenz Abwasser" Heft 6/1982 S. 377 - 381 sind folgende 4 kontinuierliche Apparaturen zur Umwandlung von Biomasse zu Öl beschrieben
- Ofen mit Transportschnecke
- Drehrohrofen
- Ofen mit Transportband
- Schachtofen
Alle kontinuierlichen Anlagen haben gemeinsam, daß die zu behandelnde Biomasse nur einen einzigen Prozeßraum durchläuft; sie unterscheiden sich im wesentlichen lediglich durch ihre verschiedenartigen Transportmechanismen. Im gesamten Prozeßraum herrschen beispielsweise dieselben Druckverhältnisse. In der Praxis herrscht im Prozeßraum ein leichter Überdruck, welcher gerade so groß ist um die Schwelgase aus dem Prozeßraum zu verdrängen und nach außen abzuführen. Die Entgasung der Biomasse kann somit lediglich über die Zeit und die Temperatur beeinflußt werden. Als nachteilig erweist sich dabei, daß die Transportgeschwindigkeit nur einheitlich veränderlich ist. Der Prozeß kann nicht so eingestellt werden, daß beispielsweise die Biomasse je nach Trockengehalt des Ausgangsmaterials die Trocknungszone mal langsamer und mal schneller durchläuft als die Umwandlungs- bzw. Konvertierungszone. Ferner können die verschiedenen Zonen nicht mit unterschiedlichen Drücken bzw. Unterdrücken beaufschlagt werden, da die Zonen kontinuierlich ineinander übergehen.

Aus AU-B-119 700 ist ein Chargenbetrieb bekannt, bei dem zwei Retorten abwechselnd mit Ölschiefer o.dgl. gefüllt werden. Die Füllung wird einer Wärme- und Druckbehandlung ausgesetzt. Die dabei entstehenden Gase werden kondensiert und einem Akkumulator zugeführt, aus dem Öl und Gas abgenommen werden kann. Ein Teil des Gases dient als Brenngas für eine Heizvorrichtung, ein anderer Teil, der durch die Heizvorrichtung beheizt wird, als Heizmedium für die Retorte. Am Ende eines Arbeitszyklus kühlen die Reste in der Retorte ab und können dann ausgeleert werden. Auch dieser Prozeß ist langwierig. In jeder Retorte müssen alle in einem Arbeitszyklus auftretenden Betriebsbedingungen einstellbar sein.

Die Erfindung befaßt sich generell mit der Frage, den Umwandlungsprozeß in mehrere Teilprozesse zu zerlegen und jeden Teilprozeß in einer eigenen dafür bestimmtem Kammer ablaufen zu lassen. Auf diese Weise kann jede Phase des Prozesses für sich gesteuert und optimiert werden. Beispielsweise können für eine geforderte Ausbeute die Temperatur und der Betriebsdruck für jede Phase so eingestellt werden, daß eine möglichst geringe Prozeßzeit entsteht.

In der Praxis wird z.B. gefordert, daß die Taktzeiten der einzelnen Prozeßphasen gleich sind. In diesem Fall werden bei einer vorgegebenen Taktzeit die Temperatur- und Druck- bzw. Unterdruckverhältnisse so eingestellt, daß die Ausbeute möglichst groß ist. Auf diese Weise kann die Wirtschaftlichkeit der diskontinuierlichen Betriebsweise gegenüber der kontinuierlichen Betriebsweise bemerkenswert gesteigert werden.

Der Erfindung liegt in erster Linie die Aufgabe zugrunde, Kohle aus den Reaktionsbehältern zu entnehmen, die so heiß ist, daß sie sich in Anwesenheit von Sauerstoff selbst entzünden kann.

Diese Aufgabe wird verfahrensmäßig durch die Merkmale des Anspruchs 1 und vorrichtungsmäßig durch die Merkmale des Anspruchs 2 gelöst. Der Kohlebehälter wird daher nach seiner Entleerung, aber vor dem erneuten Einfüllen der Kohle, mit einem inertem Gas gefüllt. Dieses Gas wird aus den Reaktionsprodukten gewonnen, die - da die Erhitzung unter Luftausschluß erfolgt - keinen freien Sauerstoff enthalten. Wenn die Kohle in dieser Atmosphäre abgekühlt ist, kann sie ungefährdet entleert werden.

Bei einer Weiterbildung der erfindungsgemäßen Vorrichtung kommt zu den Betriebsparametern von Temperatur und Druck, welche den Prozeß beeinflußen, noch die Wirkung des rotierenden Mischerflügels hinzu. Dieser sorgt für eine gute Durchmischung und für ein Auflockern des Füllgutes, wodurch der Entgasungsvorgang beeinflußt werden kann. Aus diesem Grunde ist die Drehzahl des Mischerflügels konstruktiv veränderlich ausgeführt, denn je schneller der Mischerflügel umläuft desto mehr wird die Biomasse aufgelockert und desto schneller erfolgt das Ausgasen. Da die Durchführung des Verfahrens in geschlossenen Behältern stattfindet tritt auch keine Geruchsbelästigung auf.

In der Regel werden folgende Prozeßstufen notwendig:

### 1. Stufe: Trocknung der feuchten Biomasse z.B. Temperaturbereich bis 115°C

Da hier der Wassergehalt der Biomasse aufgewärmt und verdampft werden muß, wird in dieser 1. Stufe die meiste Heizenergie benötigt. Gleichzeitig darf jedoch die Stofftemperatur nicht höher sein als beispielsweise 115°C. Aus diesem Grunde muß die hohe Heizenergie bei verhältnismäßig niedrigen Temperaturen zugeführt werden. Das geht am wirkungsvollsten über eine groß dimensionierte Heizfläche. Das ist die Erklärung dafür, daß die Heizfläche der 1. Stufe größer ausgeführt ist als bei den nachfolgenden Stufen.

### 2. Stufe: Entfernen des Reaktionswassers Temperaturbereich ca. 200°C

Auch trockene Biomasse weist einen hohen Wasseranteil auf, welcher allerdings nicht mehr in gelöster Form, sondern in Reaktion mit dem Stoff vorliegt. Dieses Reaktionswasser wird größtenteils im Temperaturbereich dieser 2. Temperaturstufe verdampft. Das Reaktionswasser enthält ca. 5 - 10 % C, - 3 - 7 % N (70 % davon als Amoniumsalz) und 0 - 2 % S (50 % als Sulfide).

### 3. Stufe: Konvertierung Temperaturbereich größer 200°C

Die Biomasse schwelt unter Luftausschluß und wird zu Kohle und Gas umgesetzt. Die Kohle hat die Qualität von Aktivfilterkohle (10 x teurer als Steinkohle). Der Heizwert beträgt ca. 15 - 16 MJ/kg. Das Gas besteht in der Hauptsache aus:
- Öldampf
- brennbaren Gasen: Kohlenoxid und Methangas
- Inertgas: Kohlendioxid
Das Gas wird durch einen Kondensator geführt; der Öldampf kondensiert und wird in einen Sammelbehälter geleitet und die nicht kondensierbaren Gase in den Gastank. Da das Kohlendioxid schwerer ist als Luft (spez. Gewicht 1,98 kg/m³), - Kohlenoxid und Methan dagegen leichter -, werden sich die brennbaren Gase oben im Gastank ansammeln. Hier kann es entnommen und zu Heizzwecken weiterverwendet werden.

Das nicht brennbare Inertgas Kohlnendioxid wird als Treibgas für Strahlapparate zur Unterdruckerzeugung in den Behältern benützt. Dazu wird es der unteren Hälfte des Gastanks entnommen, als Treibgas über den Verdichter in den Strahlapparat eingespeist und wieder in den Tank zurückgeleitet.

### 4. Stufe: Kohleauffang- und Kühlbehälter

Nachdem die Entgasung der Biomasse bis zu einem wirtschaftlichen Grad stattgefunden hat und abgeschlossen ist, wird die heiße, sich gebildete Kohle zur Kühlung in den nachfolgenden Behälter entleert. Dieser Behälter darf keinen freien Sauerstoff bzw. keine Luft enthalten, weil die Kohle sonst sofort zu brennen anfangen würde. Es ist deshalb notwendig, daß die Luft durch Kohlendioxid aus dem Tank zuvor verdrängt wird. In diesem Behälter muß die Kohle solange verbleiben bis sie sich soweit abgekühlt hat, daß sie nicht mehr entzündet wenn sie mit Luft in Berührung kommt. Der Behälter ist deshalb mit einer Kühlvorrichtung ausgestattet. Diese besteht zweckmäßiger Weise aus einem Doppelmantel mit dem der Behälter ausgestattet ist und durch den ein Kühlmedium geleitet wird.

Ausführungsbeispiele der Erfindung sind in den Zeichnungen dargestellt und werden im folgenden näher beschrieben.

Es zeigen
- Fig 1: ein Prozeßablauf in 2 Folgestufen
- Fig 2: ein Prozeßablauf in 4 Folgestufen
Es folgt die Erläuterung der Erfindung anhand der Zeichnungen nach Aufbau und auch nach Wirkungsweise der dargestellten Erfindung.

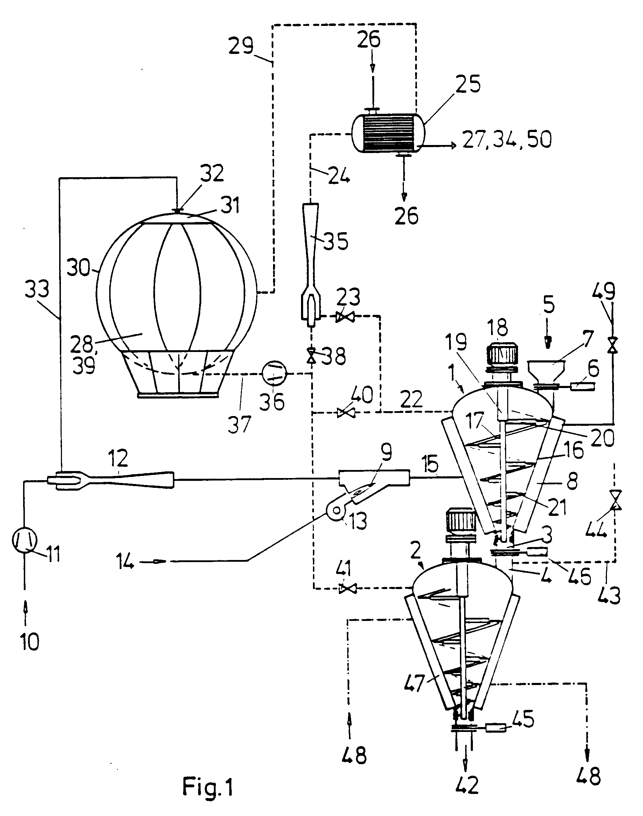

Fig 1 zeigt die Durchführung des Verfahrens in 2 Folgestufen. Im Reaktionsbehälter 1 erfolgt das Trocknen und das Erhitzen des Füllgutes, welches vorzugsweise aus organischem Material 5 besteht und im Behälter 2 das Abkühlen des organischen Materials 5 von der Prozeßtemperatur, welche zwischen 200°C und 600°C liegt, herunter auf eine Temperatur, die derart niedrig ist, daß das verkohlte organische Material 5 sich nicht mehr entzünden kann, wenn es mit Luft bzw. Sauerstoff in Berührung kommt.

Der Reaktionsbehälter 1 ist derart über dem kühlbaren Behälter 2 angeordnet, daß die Entleeröffnung 3 des Reaktionsbehälters 1 direkt über der Füllöffnung 4 des kühlbaren Behälters zu liegen kommt.

Das organische Material 5 wird bei geöffnetem Schieber 6 über den Eingabetrichter 7 in den Reaktionsbehälter 1 geschüttet bzw. eingetragen. Nachdem der Füllvorgang abgeschlossen ist, wird der Schieber 6 verschlossen und der Reaktionsbehälter 1 wird bei sich drehender Mischvorrichtung 17 aufgeheizt.

Die Heizung des Reaktionsbehälters 1 besteht im vorliegenden Ausführungsbeispiel aus dem Doppelmantel 8 in den heiße Verbrennungsgase 9 eingespeist werden. Das Heizmedium 14 für den Brenner 13 kann aus Heizöl, Erd-, Stadt- oder Propangas oder einem anderen Brennstoff bestehen. Die für die Verbrennung notwendige Luft 10 wird durch den Verdichter 11 angesaugt und dem Brenner 13 zugeführt. Bei manchen Anwendungsfällen kann es zweckmäßig sein, wenn zwischen dem Brenner 13 und dem Verdichter 11 ein Strahlapparat 12 angeordnet ist. Die bei der Verbrennung im Brenner 13 entstandenen heißen Verbrennungsgase 9 werden über die Zuleitung 15 in den Doppelmantel 8 eingespeist, welcher um die konische Behälterwand 16 herum angeordnet ist. Die abgekühlten Verbrennungsgase 9 treten über die Leitung 49 aus dem Doppelmantel 8 aus. Entsprechende Meß- und Regeleinrichtungen (nicht dargestellt) sorgen für die richtigen Temperaturverhältnisse.

Damit das im Reaktionsbehälter 1 befindliche organische Material 5 gleichmäßig und rasch aufgeheizt wird, ist das Innere des Reaktionsbehälter 1 mit einer sich drehenden Mischvorrichtung 17 ausgestattet. Diese besteht aus dem Antriebsmotor 18 und der drehbaren Mittelachse 19 im Zentrum des Reaktionsbehälters 1. An der drehbaren Mittelachse 19 befinden sich Speichen 20, welche zur konischen Behälterwand 16 hin mit spiralförmigen Abstreifern 21 versehen sind. Durch die Drehbewegung der spiralförmigen Abstreifer 21 wird das organische Material 5 durchmischt was eine gleichmäßige Erwärmung zur Folge hat. Je höher die Drehzahl des Antriebsmotors 18 ist, desto besser ist die Durchmischung und die Entgasung des organischen Materials 5. Da das Erhitzen des organischen Materials 5 unter Luftausschluß erfolgt, wird die im Reaktionsbehälter 1 befindliche Luft aufgebraucht; danach schwelt das organische Material 5 unter der Wärmezuführung infolge der Heizung weiter und verkohlt. Die Gase die dabei entstehen entweichen über die Leitung 22, über das geöffnete Ventil 23 und über die Leitung 24. Anschließend gelangen sie in den Kondensator 25, welcher mittels eines durchfließenden Kühlmediums 26 gekühlt wird. Die Gase die beim Schwelprozeß im Reaktionsbehälter 1 entstehen, sind in der Hauptsache Dämpfe aus Reaktionswasser 50 und Öl 27, welche sich im Kondensator 25 verflüssigen und Gase 28, die unter atmosphärischen Bedingungen und bei Temperaturen über 0°C nicht kondensieren. Diese nichtkondensierbaren Gase 28 treten oben am Kondensator 25 aus und gelangen über die Leitung 29 in den Tank 30. Die brennbaren nichtkondensierbaren Gase 28 bestehen hauptsächlich aus den gasförmigen Brennstoffen 31 Methan und Kohlenoxid und da sie leichter sind als Luft, werden sie sich im Tank 30 oben ansammeln. Der weitaus größte Teil der entstehenden nichtkondensierbaren Gase 28 besteht aus Kohlendioxid 39. Dieses Gas ist schwerer als Luft; es wird sich deshalb im Tank 30 unten ansammeln. Die gasförmigen Brennstoffe 31 Methan und Kohlenoxid werden über die Entnahmeöffnung 32, welche sich am obersten Punkt des Tanks 30 befindet, dem Tank 30 entnommen und über die Leitung 33 dem Brenner 13 zugeführt.

In manchen Fällen ist es vorteilhaft, wenn die gasförmigen Brennstoffe 31 Methan und Kohlenoxid aus dem Tank 30 abgesaugt werden. Das kann geschehen durch Anschließen der Leitung 33 an die Saugseite des Strahlapparates 12.

Die aus dem Kondensator 25 austretende Flüssigkeit 34 stellt ein Gemisch dar, welches aus Öl 27 und Reaktionswasser 50 besteht. In einem Auffangbehälter (nicht dargestellt) wird sich das Öl 27 oben ansammeln und das Reaktionswasser 50 unten, da das spezifische Gewicht des Öles 27 leichter ist als dasjenige des Reaktionswassers 50.

Das Entgasen des schwelenden organischen Materials 5 wird durch Ausbildung eines Unterdruckes bzw. eines Vakuums verstärkt und beschleunigt. Die Leitung 22 wird deshalb über das geöffnete Ventil 23 an der Saugseite des Strahlapparates 35 angeschlossen. Der Verdichter 36 entnimmt über die Leitung 37, welche unten am Tank 30 angeschlossen ist, das Inertgas Kohlendioxid 39 und treibt es bei geöffnetem Ventil 38 und geschlossenen Ventilen 40 und 41 durch den Strahlapparat 35, wo saugseitig, also in der Leitung 22 ein Unterdruck entsteht. Das Inertgas Kohlendioxid 39 dient dem Strahlapparat 35 als Treibmittel.

Ist der Schwelvorgang bzw. die Umwandlung des organischen Materials 5 in Kohle 42, verdampfte Flüssigkeiten 34 und Gasen 28 abgeschlossen, dann wird die Kohle 42 in den Behälter 2, welcher mit einer Kühlung versehen ist, entladen. Da die heiße Kohle 42 jedoch sofort brennen würde, wenn sie mit Luft bzw. Sauerstoff in Berührung kommt, muß die Luft bzw. der Sauerstoff zuvor aus dem Behälter 2 verdrängt werden. Dies geschieht durch Schließen der Ventile 38,40 und durch Öffnen des Ventils 41. Der Verdichter 36 drückt bei geschlossenem Schieber 45 Kohlendioxid 39 aus dem Tank 30 in den Behälter 2. Da das Kohlendioxid 39 schwerer ist als Luft, tritt letztere aus der Leitung 43, welche oben am Behälter 2 angebracht ist, aus. Sobald der Austritt von Luft beendet ist, welches von einem Sensor (nicht dargestellt) bemerkt wird, schließt das Ventil 44. Anschließend öffnet der Schieber 46, welcher zwischen der Entleeröffnung 3 des Reaktionsbehälters 1 und der Füllöffnung 4 des Behälters 2 angebracht ist und die heiße Kohle 42 gelangt vom Reaktionsbehälter 1 in den Behälter 2. Die Behälterwand 47 des Behälters 2 ist wie beim Reaktionsbehälter 1 mit einem Doppelmantel 47 versehen, durch das Kühlmittel 48 hindurchgepumpt wird. Damit die Kohle 42 im Behälter 2 gleichmäßig und rasch herunterkühlt, ist der Behälter 2 wie der Reaktionsbehälter 1 mit einer Mischvorrichtung 17 ausgestattet. Sobald die Kohle 42 im Behälter 2 soweit heruntergekühlt ist, daß sie nicht mehr brennt, wenn sie mit Luft oder Sauerstoff in Berührung kommt, öffnet Ventil 45 und die Kohle 42 wird entladen.

Die Arbeitsschritte sind so gelegt, daß während im Reaktionsbehälter 1 das organische Material 5 aufgeheizt und zu Kohle 42 umgewandelt wird, im Behälter 2 die heiße Kohle 42 abgekühlt wird. Danach wird der Schieber 45 zum Entleeren der Kohle 42 geöffnet. Nach erfolgter Entladung schließt der Schieber 45 wieder, sodann wird der Sauerstoff aus dem Behälter 2 verdrängt und der Schieber 46 öffnet wieder zur Füllung des Behälters 2.

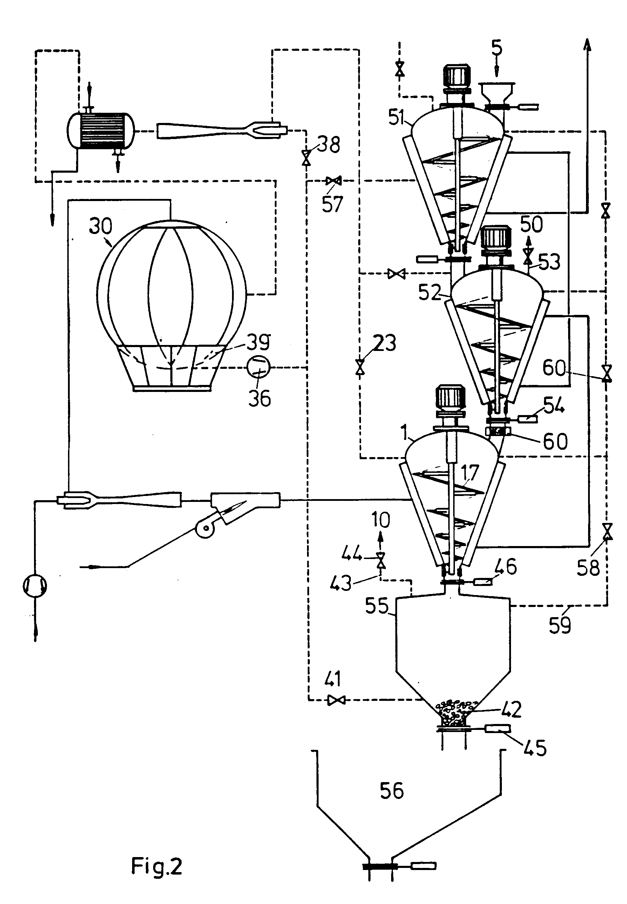

In Fig 2 ist eine weitere Ausführungsvariante der erfindungsgemäßen Vorrichtung dargestellt. Hier ist die Durchführung des Verfahrens in 4 Arbeitsschritte zerlegt.

Im Behälter 51 wird das organische Material 5 durch Erwärmen auf das Temperaturniveau von ca. 115°C getrocknet. Sodann erfolgt die Entleerung in den Behälter 52 und die Aufheizung des organischen Materials 5 auf 180°C bis 200°C. Bei diesem Arbeitsschritt wird der größte Teil des Reaktionswassers 50 verdampft. Der Dampf tritt bei der Leitung 53 aus. Aus wirtschaftlichen Erwägungen wird die Verdampfungswärme zurückgewonnen, indem der Wasserdampf kondensiert wird (nicht dargestellt). Ist dieser Arbeitsschritt ebenfalls abgeschlossen, dann wird der Schieber 54 geöffnet und das heiße organische Material 5 gelangt in den nachfolgenden Reaktionsbehälter 1 mit der höchsten Temperaturstufe, nämlich mindestens 200°C bis maximal 600°C. Hier wird das organische Material 5 zu Kohle 42 umgewandelt. Während dieser Umwandlung entstehen dieselben Reaktionsprodukte wie bereits bei Fig 1 beschrieben wurde. Nachdem der Arbeitsschritt im Reaktionsbehälter 1 ebenfalls abgeschlossen ist erfolgt die Entleerung durch Öffnen des Schiebers 46. Die Kohle 42 fällt in den geschlossenen Kohlebunker 55, bei dem zuvor jedoch der Sauerstoff durch Einleiten von Kohlendioxid 39 verdrängt worden ist. Dies geschieht, wie ebenfalls bereits bei Fig 1 beschrieben worden ist, mittels des Verdichters 36, welcher das Kohlendioxid 39 vom Tank 30 in den geschlossenen Kohlebunker 55 fördert. Dazu müssen die Ventile 38,57 geschlossen sein und das Ventil 41 offen. Die Luft 10, welche leichter ist als das in den geschlossenen Kohlebunker 55 einströmende Kohlendioxid 39, wird bei geöffnetem Ventil 44 über die oben angebrachte Leitung 43 entweichen. Sobald der freie Sauerstoff aus dem Kohlebunker 55 verdrängt ist schließt das Ventil 44 und der Schieber 46 wird geöffnet, so daß die Kohle 42 vom Reaktionsbehälter 1 in den geschlossenen Kohlebunker 55 fallen kann. Vor dem Öffnen des Schiebers 46 muß allerdings zuerst ein Druckausgleich zwischem dem Reaktionsbehälter 1 und dem Kohlebunker 55 hergestellt werden. Dies geschieht durch Öffnen des Ventiles 58, welches in der Leitung 59 angeordnet ist. Die Leitung 59 verbindet den Innenraum des Kohlebunkers 55 mit demjenigen des Reaktionsbehälters 1. Auf gleiche Weise kann auch ein Druckausgleich zwischen dem Reaktionsbehälter 1 und dem Behälter 52 sowie zwischen den Behältern 52 und 51 erreicht werden. Ist der Kohlebunker 55 hinreichend groß bemessen, dann wird bei ihm keine Kühleinrichtung und auch keine Mischvorrichtung 17 benötigt, so wie dies bei Behälter 2 in Fig 1 der Fall war. Es ist jedoch sicherzustellen, daß im Kohlebunker 55 zu dem Zeitpunkt des Öffnens von Schieber 46 immer eine sauerstofffreie Atmosphäre herrscht. Nachdem sich die heiße Kohle 42 im geschlossenen Kohlebunker 55 abgekühlt hat und der Kohlebunker 55 genügend gefüllt ist, kann der Schieber 45 geöffnet werden, so daß der Austrag der Kohle 42 in den offenen Kohlebunker 56 erfolgt. Die Umwandlung des organischen Materials 5 im Reaktionsbehälter 1 wird beschleunigt, wenn es vor dem Eintritt in den Reaktionsbehälter 1 das Mahlwerk 60 durchläuft und zerkleinert wird.

Die Durchführung des Verfahrens bei der in Fig 2 dargestellten Anordnung läuft wie folgt ab:
- Öffnen des Ventiles 58 (Druckausgleich zwischen Kohlebunker 55 und Reaktionsbehälter 1)
- Öffnen des Schiebers 46 (Kohle gelangt vom Reaktionsbehälter 1 in den geschlossenen Kohlebunker 55)
- Schließen des Schiebers 46 und des Ventiles 58
- Öffnen des Ventiles 60 (Druckausgleich zwischen Reaktionsbehälter 1 und dem Behälter 52 )
- Öffnen des Schiebers 54 (trockenes und ca. 200°C heißes organisches Material 5 gelangt vom Behälter 52 in den Reaktionsbehälter 1)
- Schließen des Ventiles 60 und des Schiebers 54.

Auf dieselbe Weise erfolgt das Umladen des organischen-Materials 5 vom Behälter 51 in den Behälter 52.

Bei einer Weiterbildung können die für die Durchführung des Verfahrens notwendigen Apparaturen, Behälter und Armaturen auch auf einem (nicht veranschaulichten) fahrbaren Rahmen montiert sein.

| Bezugswörterverzeichnis | | | |
|---|---|---|---|
| 1 | Reaktionsbehälter | 32 | Entnahmeöffnung |
| 2 | Behälter (kühlbar) | 33 | Leitung |
| 3 | Entleeröffnung | 34 | Flüssigkeit |
| 4 | Füllöffnung | 35 | Strahlapparat |
| 5 | organisches Material | 36 | Verdichter |
| 6 | Schieber | 37 | Leitung |
| 7 | Eingabetrichter | 38 | Ventil |
| 8 | Doppelmantel | 39 | Kohlendioxid |
| 9 | Verbrennungsgase (heiß) | 40 | Ventil |
| 10 | Luft | 41 | Ventil |
| 11 | Verdichter | 42 | Kohle |
| 12 | Strahlapparat | 43 | Leitung |
| 13 | Brenner | 44 | Ventil |
| 14 | Heizmedium | 45 | Schieber |
| 15 | Zuleitung | 46 | Schieber |
| 16 | Behälterwand (konisch) | 47 | Doppelmantel |
| 17 | Mischvorrichtung | 48 | Kühlmittel |
| 18 | Antriebsmotor | 49 | Leitung |
| 19 | Mittelachse (drehbar) | 50 | Reaktionswasser |
| 20 | Speichen | 51 | Behälter |
| 21 | Abstreifer (spiralförmig) | 52 | Behälter |
| 22 | Leitung | 53 | Leitung |
| 23 | Ventil | 54 | Schieber |
| 24 | Leitung | 55 | Kohlebunker (geschlossen) |
| 25 | Kondensator | 56 | Kohlebunker (offen) |
| 26 | Kühlmedium | 57 | Ventil |
| 27 | Öl | 58 | Ventil |
| 28 | Gase (nicht kondensierbar) | 59 | Leitung |
| 29 | Leitung | 60 | Mahlwerk |
| 30 | Tank | | |
| 31 | Brennstoffe (gasförmig) | | |

## Patentansprüche

1. Verfahren zur Gewinnung von Brennstoffen aus organischem Material, welches zu diesem Zwecke unter Luftausschluß auf 200°C bis 600°C erhitzt wird, wobei Kohle und gasförmige Reaktionsprodukte entstehen, welche durch Abkühlen teilweise verflüssigt werden, wobei die gasförmigen Reaktionsprodukte, welche keinen freien Sauerstoff enthalten und welche unter atmosphärischen Bedingungen bei Temperaturen über 0°C nicht kondensiert werden können, gesammelt und in einen der Aufnahme und Abkühlung der Kohle dienenden Behälter nach dessen Entleerung, aber vor dem Einfüllen der Kohle so lange eingespeist wird, bis der freie Sauerstoff vollständig daraus verdrängt ist.

2. Vorrichtung zur Gewinnung von Brennstoffen aus organischem Material, welches zu diesem Zwecke unter Luftausschluß auf 200°C bis 600°C erhitzt wird, wobei Kohle und gasförmige Reaktionsprodukte entstehen, welche durch Abkühlen teilweise verflüssigt werden, mit mindestens einem Reaktionsbehälter (1; 51, 52) und einem in Reihe damit geschalteten, der Aufnahme und Abkühlung der Kohle dienenden Kohlebehälter (2; 55), mit einem vom Reaktionsbehälter beschickbaren Kondensator (25) und mit einem vom Kondensator beschickbaren Gastank (30), wobei der Kohlebehälter mit dem Gastank (30) verbunden und bei der Aufnahme der Kohle mit inertem Gas gefüllt ist.

3. Vorrichtung nach Anspruch 2, dadurch gekennzeichnet, daß die Behälter (1; 51, 52) so angeordnet sind, daß die unten am Behälter (1) befindliche Entleeröffnung (3) sich über der Füllöffnung (4) des nachfolgenden Behälters (2) befindet.

4. Vorrichtung nach den Ansprüchen 2 oder 3, dadurch gekennzeichnet, daß die Behälter (1, 2; 51, 52) konisch mit nach unten zu kleiner werdendem Durchmesser ausgeführt sind und daß der konische Teil der zur Erhitzung des organischen Materials (5) dienenden Behälter (1, 2; 51, 52) mit einer Heizung versehen ist.

5. Vorrichtung nach einem der Ansprüche 2 bis 4, dadurch gekennzeichnet, daß die Behälter (1; 52) mittels einer Leitung (22) an einer Vakuumpumpe (35) angeschlossen sind und daß die Vakuumpumpe (35) aus einem Strahlapparat besteht, welcher mit dem Gas (28) aus dem Gastank (30) betrieben wird.

6. Vorrichtung nach einem der Ansprüche 2 bis 5, dadurch gekennzeichnet, daß der Gastank (30) an seinem höchsten Punkt eine Entnahmeöffnung (32) aufweist, an die eine gasdichte Leitung (33) angeschlossen ist, welche zur Heizung des Behälters (1) mit der höchsten Temperaturstufe führt.

7. Vorrichtung nach einem der Ansprüche 4 bis 6, dadurch gekennzeichnet, daß die Behälter (1, 2; 51, 52) in ihrer Mittelachse (19) mit einer drehbaren Mischvorrichtung (17) mit Abstreifer (21) ausgestattet sind, welche zum konischen Teil der Innenwand der Behälter (1, 2; 51, 52) mit geringem Spiel versehen sind.

8. Vorrichtung nach einem der Ansprüche 2 bis 7, dadurch gekennzeichnet, daß den Behältern (1; 52), in denen das organische Material (5) durch Erwärmen umgewandelt wird, ein zusätzlicher Behälter (51) vorgeschaltet ist, in dem das organische Material durch Erwärmen auf das Temperaturniveau von 100°C getrocknet wird, und daß mindestens bei einem der Behälter (1; 52), in denen das organische Material (5) durch Erwärmen umgewandelt wird, in der Füllöff nung (4) ein Mahlwerk (60) angeordnet ist.

9. Vorrichtung nach einem der Ansprüche 2 bis 8, dadurch gekennzeichnet, daß die Heizfläche des Behälters (51) der niedersten Temperaturstufe am größten ist und daß sie bei den nachfolgenden Behältern (1; 52), in denen die Temperatur zunimmt, kleiner ist.

10. Vorrichtung nach einem der Ansprüche 2 bis 9, dadurch gekennzeichnet, daß die für die Durchführung des Verfahrens notwendigen Apparaturen, Behälter (1, 2) und Armaturen auf einem fahrbaren Rahmen montiert sind.

## Claims

1. Process for the extraction of fuels from organic material, which for this purpose is heated with the exclusion of air to 200°C to 600°C, whereby coal and gaseous reaction products arise, which are partially condensed by cooling, whereby the gaseous reaction products, which do not contain any free oxygen and which cannot be condensed under atmospheric conditions at temperatures over 0°C, are collected and fed into a container serving the admission and cooling of the coal, after it has been emptied, but before the coal has been put in, until the free oxygen is completely expelled from it.

2. Device for the extraction of fuels from organic material, which for this purpose is heated with the exclusion of air to 200°C to 600°C, whereby coal and gaseous reaction products arise, which are partially condensed by cooling, having at least one reaction container (1; 51, 52) and a coal container (2; 55) connected in series therewith and serving the admission and cooling of the coal, having a condenser (25) loadable by the reaction container and having a gas tank (30) loadable by the condenser, whereby the coal container is connected to the gas tank (30) and upon admission of the coal is filled with inert gas.

3. Device according to claim 2, characterized in that the containers (1; 51, 52) are arranged in such a way that the emptying opening (3) located at the bottom of the container (1) is located over the filling opening (4) of the subsequent container (2).

4. Device according to claims 2 or 3, characterized in that the containers (1, 2; 51, 52) are designed conically with a diameter which becomes smaller towards the bottom and in that the conical part of the containers (1, 2; 51, 52) serving to heat the organic material (5) is provided with heating.

5. Device according to one of claims 2 to 4, characterized in that the containers (1; 52) are attached to a vacuum pump (35) by means of a line (22) and in that the vacuum pump (35) consists of a jet apparatus which is operated with the gas (28) from the gas tank (30).

6. Device according to one of claims 2 to 5, characterized in that the gas tank (30) has at its highest point a removal opening (32) to which a gastight line (33) is attached, which leads to the heating of the container (1) with the highest temperature level.

7. Device according to one of claims 4 to 6, characterized in that the containers (1, 2; 51, 52) are equipped in their centre axis (19) with a rotatable mixing device (17) with wipers (21) which are provided with little clearance from the conical part of the inner wall of the containers (1, 2; 51, 52).

8. Device according to one of claims 2 to 7, characterized in that an additional container (51) is connected in series with the containers (1; 52), in which the organic material (5) is converted by heating, in which container (51) the organic material is dried by heating to the temperature level of 100°C, and in that with at least one of the containers (1; 52), in which the organic material (5) is converted by heating, a grinder (60) is arranged in the filling opening (4).

9. Device according to one of claims 2 to 8, characterized in that the heating face of the container (51) of the lowest temperature level is greatest and in that, in the subsequent containers (1; 52) in which the temperature increases, it is smaller.

10. Device according to one of claims 2 to 9, characterized in that the apparatuses, containers (1, 2) and fittings necessary for carrying out the method are mounted on a portable frame.

## Revendications

1. Procédé pour la récupération de combustibles à partir de matières organiques qui sont pour ce faire chauffées sans air de 200°C jusqu'à 600°C, du charbon et des produits réactionnels gazeux se formant à cette occasion et sont partiellement liquéfiés par refroidissement , les produits réactionnels gazeux qui ne contiennent pas d'oxygène libre et qui ne peuvent se condenser dans des conditions atmosphériques à des températures supérieures à 0°C sont recueillis et amenés à un réservoir de recueil et de refroidissement du charbon après leur évacuation, cependant avant le remplissage du charbon, ils sont amenés le temps nécessaire pour en chasser complètement l'oxygène libre.

2. Procédé pour la récupération de combustibles à partir de matières organiques qui sont pour ce faire chauffées sans air de 200°C jusqu'à 600°C, du charbon et des produits réactionnels gazeux se formant à cette occasion et qui sont partiellement liquéfiés par refroidissement avec au moins un réservoir de réaction (1 ; 51, 52) et dans un réservoir de charbon raccordé en série et servant au recueil et au refroidissement du charbon (2 ; 55) avec un condenseur (25) pouvant être alimenté par le réservoir de réaction et un réservoir de gaz (30) pouvant être alimenté par le condenseur, le réservoir de charbon étant raccordé au réservoir de gaz (30) et lors du chargement du charbon étant rempli de gaz inerte.

3. Dispositif selon la revendication 2, caractérisé en ce que les récipients (1 ; 51, 52) sont agencés de telle manière que l'ouverture de vidange (3) située au-dessous du récipient (1) se trouve au-dessus de l'ouverture de remplissage (4) du réservoir suivant (2).

4. Dispositif selon la revendication 2 ou 3, caractérisé en ce que les réservoirs (1, 2 ; 51, 52) sont conçus de façon à présenter un diamètre s'amenuisant vers le bas de façon conique et en ce que la partie conique des réservoirs (1, 2 ; 51, 52) servant au chauffage des matières organiques (5) est munie d'un système de chauffage.

5. Dispositif selon l'une des revendications 2 à 4, caractérisé en ce que les réservoirs (1 ; 52) sont raccordés par une conduite (22) à une pompe de vide (35) et en ce que la pompe de vide (35) consiste en un appareil de pulvérisation qui est actionné avec le gaz (28) provenant du réservoir de gaz (30).

6. Dispositif selon l'une des revendications 2 à 5, caractérisé en ce que le réservoir de gaz 30 présente sur son point supérieur extrême une ouverture de prélèvement (32) sur laquelle est raccordée une conduite (33) étanche au gaz qui mène au système de chauffage du récipient (1) à l'étage de température extrême.

7. Dispositif selon l'une des revendications 4 à 6, caractérisé en ce que les récipients (1, 2 ; 51, 52) sont munis dans leur axe médian (19) d'un système de mélange rotatif (17) muni d'un râcloir (21) et qui vers la partie conique de la paroi interne des récipients (1, 2 ; 51, 52) comporte un léger jeu.

8. Dispositif selon l'une des revendications 2 à 7, caractérisé en ce qu'un récipient supplémentaire (51) est implanté en amont des récipients (1 ; 52) dans lesquels la matière organique (5) est transformée par chauffage, récipient supplémentaire (51) dans lequel la matière organique est séchée par chauffage jusqu'au niveau de température de 100°C et en ce qu'au moins pour un des récipients (1 ; 52) dans lesquels la matière organique (5) est transformée par chauffage, un système de broyage (60) étant agencé dans l'ouverture de remplissage (4).

9. Dispositif selon l'une des revendications 2 à 8, caractérisé en ce que la surface de chauffage du récipient (51) de l'étage de température le plus bas est la plus grande et en ce que cette surface de chauffage est plus petite pour les récipients successifs (1 ; 52) dans lesquels la température diminue.

10. Dispositif selon l'une des revendications 2 à 9, caractérisé en ce que les appareils, récipients (1, 2) et accessoires de tuyauterie nécessaires pour la réalisation du procédé sont montés sur un châssis déplaçable.
